## Europäisches Patentamt
## European Patent Office
## Office européen des brevets

(19)

(11) Veröffentlichungsnummer: **0 048 866**
**B1**

(12) **EUROPÄISCHE PATENTSCHRIFT**

(45) Veröffentlichungstag der Patentschrift:
**07.03.84**

(21) Anmeldenummer: **81107158.8**

(22) Anmeldetag: **10.09.81**

(51) Int. Cl.³: **H 04 B 7/26,** H 04 L 25/38,
H 04 L 1/20

(54) Verfahren zur Erkennung von Digitalinformation bei einer digitalen Informationsübertragung, insbesondere Informationsübertragung in Mobilfunk-Kommunikationssystemen.

(30) Priorität: **29.09.80 DE 3036612**

(43) Veröffentlichungstag der Anmeldung:
**07.04.82 Patentblatt 82/14**

(45) Bekanntmachung des Hinweises auf die Patenterteilung:
**07.03.84 Patentblatt 84/10**

(84) Benannte Vertragsstaaten:
**BE FR GB IT NL SE**

(56) Entgegenhaltungen:
**DE - A - 2 901 171**
**DE - B - 1 804 719**
**FR - A - 2 017 594**
**US - A - 2 398 490**
**US - A - 3 217 258**
**US - A - 3 480 910**
**US - A - 3 938 081**

(73) Patentinhaber: **SIEMENS AKTIENGESELLSCHAFT,
Berlin und München Wittelsbacherplatz 2,
D-8000 München 2 (DE)**

(72) Erfinder: **Das Gupta, Probodh, Lohengrinstrasse 32,
D-8034 Germering (DE)**

Verfahren zur Erkennung von Digitalinformation bei einer digitalen Informationsübertragung, insbesondere Informationsübertragung in Mobilfunk-Kommunikationssystemen

Die vorliegende Erfindung betrifft ein Verfahren zur Erkennung von Digitalinformation bei einer digitalen Informationsübertragung, insbesondere Informationsübertragung in Mobilfunk-Kommunikationssystemen, und eine Schaltungsanordnung zur Durchführung des Verfahrens.

Sprache, Daten und Bild sind die Informationsformen, die in bekannten, drahtgebundenen Kommunikationssystemen und in zukünftigen Mobilfunk-Kommunikationssystemen zu übertragen sind. Bei einer Übertragung von Information, insbesondere digitalisierter Information in einem Mobilfunk-Kommunikationssystem, besteht ein Problem darin, dass durch sog. Mehrwegausbreitung auf dem Funkweg das bekannte Fading entsteht, das während eines Übertragungsvorgangs Informationsbitfehler verursachen kann.

Es sind Verfahren bekannt, mittels derer auf der jeweiligen Empfängerseite aus der dort zur Verfügung stehenden Digitalinformation ein Abtastpuls abgeleitet wird und dieser Abtastpuls dazu verwendet wird, einen Abtastzeitpunkt in den jeweiligen Bereich eines Informationselements zu legen, in dem der abzutastende, dieses Informationselement repräsentierende Impuls seinen vermutbaren quasistationären Zustand einnimmt, vergl. beispielsweise DE-B-1 804 719. Aus dieser Druckschrift geht ein Verfahren zur Erkennung von Digitalinformation bei einer digitalen Informationsübertragung hervor, bei welchem ein Vergleich eines ersten Abtastergebnisses mit einem weiteren für ein individuelles Informationselement durchgeführt wird. Diese bekannten Verfahren haben jedoch den Nachteil, dass in solchen Fällen, in denen Informationselemente repräsentierende Impulse durch Störeinflüsse in ihrer Amplitude und/oder in ihrer Phase verzerrt werden, gerade in dem jeweiligen abgetasteten Bereich einen Bitfehler vortäuschen können, obwohl der betreffende Impuls insgesamt betrachtet fehlerfrei sein kann.

In den bisher konzipierten Mobilfunk-Kommunikationssystemen wird eine möglichst günstige Bitfehlerrate durch Anwendung unterschiedlicher Codierungsverfahren, beispielsweise «Forward Error Correcting», angestrebt. Diese Philosophie steht jedoch dem Bestreben entgegen, eine Vereinheitlichung der Betriebsweisen zu erreichen.

Aus der DE-A1-2 901 171 ist bereits ein Verfahren zur Erkennung von Digitalinformation bei einer digitalen Informationsübertragung der eingangs erläuterten Art bekannt, bei dem jedes erfasste Informationselement zwischengespeichert wird, bei dem jeweils während einer Zwischenspeicherphase jedes Informationselement mit jedem anderen Informationselement verglichen wird und bei dem am Ende der Zwischenspeicherphase eines aus gegebenenfalls mehreren als fehlerfrei erkannten Informationselementen weitergeleitet wird.

Der vorliegenden Erfindung liegt die Aufgabe zugrunde, ein Verfahren zur Erkennung von Digitalinformation bei einer digitalen Informationsübertragung der genannten Art zu schaffen, mittels dessen günstige Bitfehlerraten erzielt werden können, ohne einen der zuvor genannten Nachteile in Kauf nehmen zu müssen.

Die der Erfindung zugrundeliegende Aufgabe wird durch ein Verfahren zur Erkennung von Digitalinformation bei einer digitalen Informationsübertragung, insbesondere Informationsübertragung in Mobilfunk-Kommunikationssystemen, bei dem ein Abtastpuls aus der empfangsseitig zur Verfügung stehenden Digitalinformation mit vorzugsweise einem ganzzahligen Vielfachen der Informationstaktfrequenz abgeleitet wird und bei dem ein Abtastzeitpunkt in den jeweiligen Bereich eines Informationselements gelegt ist, in dem der abzutastende, dieses Informationselement repräsentierende Impuls einen vermutbaren quasistationären Zustand einnimmt, bei welchem Verfahren jedes gewonnene Informationselement zwischengespeichert wird, wonach jeweils während einer Zwischenspeicherphase jedes Informationselement mit jedem anderen Informationselement verglichen wird und wobei am Ende der Zwischenspeicherphase eins aus gegebenenfalls mehreren als fehlerfrei erkannten Informationselementen weitergeleitet wird, gelöst, das dadurch gekennzeichnet ist, dass zumindest ein weiterer, nicht korrelierter Abtastpuls aus der empfangsseitig zur Verfügung stehenden Digitalinformation abgeleitet wird, der ein weiteres ganzzahliges Vielfaches der Informationstaktfrequenz aufweist, dass weitere Flanken des Abtastpulses an entsprechend vielen Abtastzeitpunkten innerhalb eines weitergespannten Abtastbereiches des das Informationselement repräsentierenden Impuls gelegt sind, dass jeweils ein Vergleich eines ersten Abtastergebnisses mit einem oder mehreren folgenden Abtastergebnissen für ein individuelles Informationselement durchgeführt wird, dass eine Mehrheitsentscheidung aufgrund der vorliegenden Abtastergebnisse getroffen wird, dass alle vorgesehenen Abtastmodi gleichzeitig wirksam sind und dass die nicht weitergeleiteten Informationselemente vernichtet werden.

Die vorliegende Erfindung bietet den Vorteil, dass auf einfache Weise eine Mehrfachabtastung der Informationselemente durchführbar ist und an sich insgesamt fehlerfreie, jedoch verzerrte Informationselemente repräsentierende Impulse als fehlerfrei akzeptiert werden können, so dass die Informationsübertragung einen höheren Nutzeffekt erfährt.

Vorteilhafte Weiterbildungen der Erfindung sind durch die in den Unteransprüchen angegebenen Merkmale gekennzeichnet.

Im folgenden wird die Erfindung anhand mehrerer, ein bevorzugtes Ausführungsbeispiel für die Erfindung betreffender Figuren im einzelnen erläutert.

Fig. 1 zeigt das Diagramm eines Informationsimpulses mit verschiedenen Abtastpulsen.

Fig. 2 zeigt das Blockschaltbild eines bevorzugten Ausführungsbeispiels für eine Schaltungsanordnung zur Durchführung des erfindungsgemässen Verfahrens.

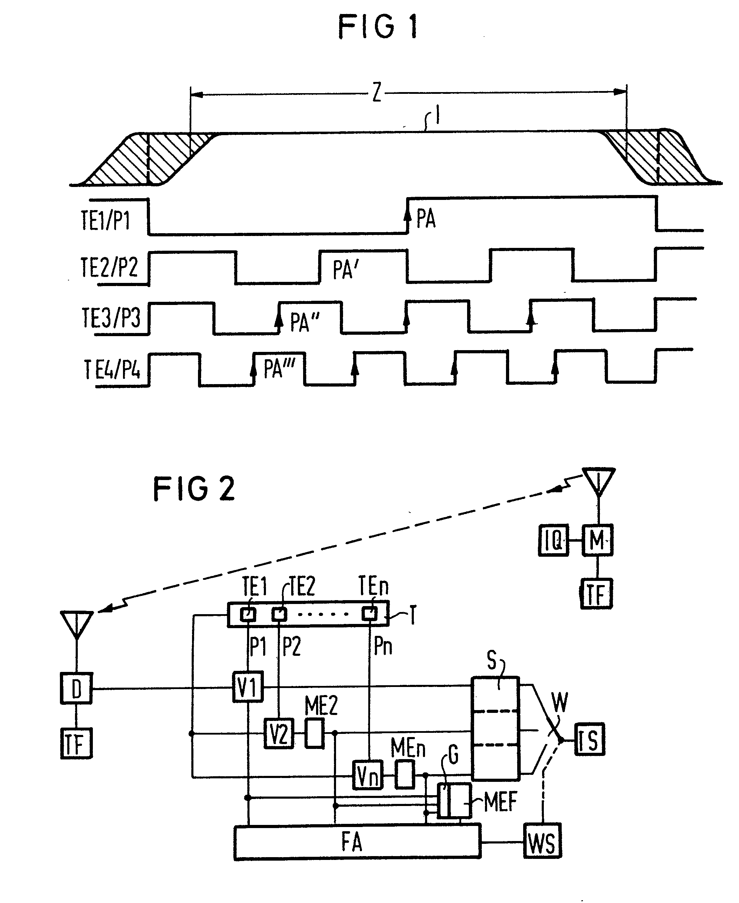

In der empfängerseitigen Schaltungsanordnung zur Durchführung des Verfahrens sind ein Demodulator D, ein Trägerfrequenzgenerator TF, verschiedene nicht korrelierte Takterzeugungseinrichtungen TE1, TE2 . . . TEn, mehrere Vergleicher V1, V2 . . . Vn, mehrere Mehrheitsentscheidungsstufen ME2 . . . MEn, eine Fehlerraten-Auswertungseinrichtung FA, eine Mehrheitsentscheidungsstufe zur Beurteilung der mittleren Fehlrate MEF mit einer vorgeschalteten Gewichtungsstufe G, eine Wählvorrichtung W, eine Wählvorrichtungssteuerung SW, ein Speicher S sowie die Informationssenke IS vorgesehen. Senderseitig sind an sich bekannte, nur zum Verständnis der Zusammenhänge gezeigte Einrichtungen, wie eine Informationsquelle Q, ein Trägerfrequenzgenerator TF und ein Modulator M dargestellt, vergl. Fig. 2.

Zum optimalen Abtasten eines ein Informationselement repräsentierenden Impulses, vergl. Fig. 1, ist erfindungsgemäss vorgesehen, dass ausser dem aus der eintreffenden Digital-Information abgeleiteten Abtastpuls, der in einer ersten Takterzeugungseinrichtung TE1 erzeugt wird, weitere nicht korrelierte Abtastpulse mit jeweils einer höheren Frequenz im Vergleich zu der Frequenz der ersten Takterzeugungseinrichtung TE1 mittels weiterer Takterzeugungseinrichtungen TE2 . . . TEn erzeugt werden. Mit den verschiedenen zur Verfügung gestellten Abtastpulsen können unterschiedliche Abtastmodi für das Abtasten des das Informationselement repräsentierenden Impulses zur Anwendung kommen.

Aus Fig. 1 geht hervor, dass der das Informationselement repräsentierende Impuls I in unterschiedlich breiten Abtastbereichen mittels der unterschiedlichen Abtastpulse P1, P2 . . . Pn abgetastet werden kann. Dafür wird jeweils ein Vergleich eines ersten Abtastergebnisses mit einem oder mehreren folgenden Abtastergebnissen für ein individuelles Informationselement durchgeführt. Aufgrund einer Mehrheitsentscheidung über die vorliegenden Abtastergebnisse wird jeweils derjenige Abtastmodus angewendet, der die kleinste erkannte Informationsfehlerrate aufweist.

Dazu sind an eine Abtasteinrichtung T, die die unterschiedlichen Takterzeugungseinrichtungen TE1, TE2 . . . TEn enthält, jeweils jeder dieser Takterzeugungseinrichtungen zugeordnete individuelle Vergleicher V1, V2 . . . Vn angeschlossen. Mit Hilfe dieser Vergleicher werden die Abtastergebnisse, die sich aus einer Einfachabtastung bzw. einer jeweiligen Mehrfachabtastung eines einzigen individuellen Informationselementes ergeben, miteinander verglichen. An die Vergleicher V2 . . . Vn sind jeweils individuelle Mehrheitsentscheidungsstufen ME2 . . . MEn angeschlossen, die jeweils in an sich bekannter Weise, beispielsweise mittels einer sog. Majoritätslogik, dasjenige Abtastergebnis als das «richtige» Abtastergebnis auswählen, das überwiegend in der Vielzahl der einzelnen Abtastergebnisse für ein einzigs Informationselement aufgetreten ist. Für den Fall, dass keine Mehrheit zustande kommt, wird der Signalausgang der betreffenden Mehrheitsentscheidungsstufe hochohmig bzw. inaktiv, beispielsweise durch eine Tristate-Logik, gemacht.

Alle derart ermittelten endgültigen Abtastergebnisse aus den einzelnen Vergleichern V1, V2 . . . Vn werden einer Mehrheitsentscheidungsstufe zur Beurteilung der mittleren Fehlerrate MEF, der eine Gewichtungsstufe G vorgeschaltet ist, und der Fehlerraten-Auswerteeinrichtung FA zugeführt. In letzterer werden sie und ein Mehrheitsentscheidungssignal aus der Mehrheitsentscheidungsstufe MEF in an sich bekannter Weise miteinander verarbeitet bzw. aufbereitet. An den Signalausgang dieser Fehlerraten-Auswerteeinrichtung FA ist die Wählvorrichtungssteuerung WS angeschlossen. Diese empfängt ein Signal, aufgrund dessen sie die Wählvorrichtung W auf den Abtastmodus, nämlich den Abtastpuls, beispielsweise P2, einstellen kann, der die kleinste erkannte Informationsbitfehlerrate aufweist. An den Signalausgang dieser Wählvorrichtung W ist die Informationssenke IS des Informationsempfängers angeschlossen.

Alle für das erfindungsgemässe Verfahren vorgesehenen Abtastmodi sind gleichzeitig wirksam. Jedes durch sie gewonnene Informationselement wird in dem Speicher S, der als Durchlaufspeicher - beispielsweise mit ladungsgekoppelten Speichern CCD realisiert - konzipiert ist, zwischengespeichert. Am Ende der Zwischenspeicherphase wird eins aus ggf. mehreren als fehlerfrei erkannten Informationselementen durch die dazu auf den betreffenden Ausgang des Speichers S eingestellte Wählvorrichtung W abgenommen.

Durch das erfindungsgemässe Verfahren und eine zum Durchführen dieses Verfahrens geeignete Schaltungsanordnung, für die die Schaltungsanordnung gemäss Fig. 2 ein bevorzugtes Ausführungsbeispiel darstellt, ist ein Verfahren zur Erkennung von Digitalinformation geschaffen worden, dass das Erkennen dieser Digitalinformation unempfindlicher gegenüber Störungen macht.

**Patentansprüche**

1. Verfahren zur Erkennung von Digitalinformation bei einer digitalen Informationsübertragung, insbesondere Informationsübertragung in Mobilfunk-Kommunikationssystemen, bei dem ein Abtastpuls (P1) aus der empfangsseitig zur Verfügung stehenden Digitalinformation mit vorzugsweise einem ganzzahligem Vielfachen der Informationstaktfrequenz abgeleitet wird und bei dem ein Abtastzeitpunkt (PA) in den jeweiligen Bereich eines Informationselementes gelegt ist, in dem der abzutastende, dieses Informationselement repräsentierende Impuls (I) seinen vermutbaren quasistationären Zustand einnimmt, bei welchem Verfahren jedes gewonnene Informationselement zwischengespeichert wird, wonach jeweils während einer Zwischenspeicherphase jedes Informationselement mit jedem anderen Informationselement verglichen wird und wobei am Ende der Zwischenspeicherphase eines aus gegebenenfalls mehreren als fehlerfrei erkannten Informationselementen weitergeleitet wird, dadurch gekennzeichnet, dass zumindest ein weiterer nicht korrelierter Abtastpuls (P2) aus der empfangsseitig zur Verfügung stehenden Digitalinformation abgeleitet wird, der ein weiteres ganzzahliges Vielfaches der Informationstaktfrequenz aufweist, dass weitere Flanken des Abtastpulses (P2) an entsprechend vielen Abtastzeitpunkten (PA') innerhalb eines weiter gespannten Abtastbereiches (Z) des das Informationselement repräsentierenden Impulses (I) gelegt sind, dass jeweils ein Vergleich eines ersten Abtastergebnisses mit einem oder mehreren folgenden Abtastergebnissen für ein individuelles Informationselement durchgeführt wird, dass eine Mehrheitsentscheidung aufgrund der vorliegenden Abtastergebnisse getroffen wird, dass alle vorgesehenen Abtastmodi gleichzeitig wirksam sind und dass die nicht weitergeleiteten Informationselemente vernichtet werden.

2. Verfahren nach Anspruch 1, dadurch gekennzeichnet, dass für den Fall, dass kein fehlerfreies Informationselement erkannt wird, dasjenige fehlerbehaftete Informationselement weitergeleitet wird, das aus demjenigen Abtastmodus gewonnen worden ist, der die geringste mittlere Fehlerrate erzeugt hat.

3. Schaltungsanordnung zur Durchführung des Verfahrens nach Anspruch 1 oder 2, dadurch gekennzeichnet, dass einem an sich bekannten Demodulator (D), an den in an sich bekannter Weise ein Trägerfrequenzgenerator (TF) angeschlossen ist, ein Antenneneingangssignal über einen Signaleingang zuführbar ist, dass an einen Signalausgang des Demodulators (D) Signaleingänge einer Vielzahl von an sich bekannten Vergleichern (V1, V2...Vn) und Signaleingänge einer Vielzahl von verschiedenen, nicht korrelierten Takterzeugungseinrichtungen (TE1, TE2...TEn) angeschlossen sind, dass jedem Vergleicher (V1, V2...Vn) jeweils der zugehörige Abtastpuls (P1, P2...Pn) zugeführt wird, dass jeweils an den Signalausgang des zweiten bis n-ten Vergleichers (V2...Vn) eine an sich bekannte Mehrheitsentscheidungsstufe (ME2... bzw. MEn) mit ihrem Signaleingang angeschlossen ist, dass die Signalausgänge der Mehrheitsentscheidungsstufen (ME2...MEn) bzw. der Signalausgang des ersten Vergleichers (V1) jeweils mit individuellen Signaleingängen einer Mehrheitsentscheidungsstufe zur Beurteilung der mittleren Fehlerrate (MEF), der eine an sich bekannte Gewichtungsstufe (G) vorgeschaltet ist, mit einer Fehlerraten-Auswerteeinrichtung (FA) und mit individuellen Eingängen eines Speichers (S) verbunden sind, dass ein Signalausgang der Fehlerraten-Auswerteeinrichtungen (FA) mit einem Signaleingang einer Wählersteuerung (WS) verbunden ist, dass ein Signalausgang der Mehrheitsentscheidungsstufe zur Beurteilung einer mittleren Fehlerrate (MEF) an einen weiteren Signaleingang der Fehlerraten-Auswerteeinrichtung (FA) angeschlossen ist, dass individuelle Signalausgänge des Speichers (S) mit diesen jeweils zugeordneten individuellen Auswahlanschlüssen einer Wählvorrichtung (W) verbunden sind und dass ein Signalausgang der Wählvorrichtungssteuerung (WS) ein Stellsignal für die Wählvorrichtung (W), mit der eine Informationssenke (IS) verbunden ist, liefert.

4. Schaltungsanordnung nach Anspruch 3, dadurch gekennzeichnet, dass der Speicher (S) aus einer Vielzahl von Durchlaufspeichern, beispielsweise ladungsgekoppelten Speichern (CCD) besteht.

**Revendications**

1. Procédé pour la reconnaissance d'informations numériques lors d'une transmission numérique d'informations, notamment une transmission l'informations dans des systèmes de communication entre postes radioélectriques mobiles, dans lequel une impulsion d'échantillonnage (P1) est dérivée de l'information numérique disponible côté réception, de préférence avec une fréquence qui est un multiple entier de la fréquence de cadence des informations, et dans lequel un instant d'échantillonnage (PA) est situé dans la région respective d'un élément d'information dans laquelle l'impulsion (I), qui doit être échantillonnée et qui représente cet élément d'information, prend son état quasi-stationnaire prévisible, procédé dans lequel chaque élément d'information obtenu est mémorisé temporairement, après quoi chaque élément d'information est respectivement comparé avec chaque autre élément d'information pendant une phase de mémorisation temporaire, et à la fin de la phase de mémorisation temporaire, il est transmis un élément d'information parmi éventuellement plusieurs identifiés comme sans erreur, caractérisé par le fait qu'au moins une autre impulsion d'échantillonnage (P2) non corrigée qui possède une fréquence qui est un autre multiple entier de la fréquence de cadence des informations est dérivée à partir de l'information numérique disponible côté réception, que d'autres flancs de l'impulsion d'échantillonnage (P2) sont placés à un nombre correspondant d'instants d'échantillonnage (PA') à l'intérieur d'une région d'échantillonnage (Z), couvrant un laps de temps différent, de l'impulsion (I) représentant l'élément d'information, qu'une comparaison a respectivement lieu entre un premier résultat d'échantillonnage et un ou plusieurs autres résultats d'échantillonnage suivants pour un élément d'information individuel, qu'une décision majoritaire est prise sur la base des résultats d'échantillonnage existants, que tous les modes d'échantillonnage prévus sont efficaces simultanément et que les éléments d'information non transmis sont supprimés.

2. Procédé suivant la revendication 1, caractérisé par le fait que dans le cas où aucun élément d'information sans erreur n'a été identifié, on transmet l'élément d'information erroné qui a été obtenu à partir du mode d'échantillonnage qui a fourni le taux d'erreurs moyen le plus faible.

3. Circuit pour la mise en œuvre du procédé suivant la revendication 1 ou 2, caractérisé par le fait qu'un signal d'entrée d'antenne peut être appliqué, par l'intermédiaire d'une entrée de signaux, à un démodulateur (D) connu en soi auquel un générateur de fréquence porteuse TF est raccordé de façon connue en soi, que des entrées de signaux d'un grand nombre de comparateurs connus en soi (V1, V2 . . . Vn) et des entrées de signaux d'un grand nombre de générateurs de cadence différents non corrélés (TE1, TE2 . . . Tn) sont raccordées à une sortie de signaux du démodulateur (D), que l'impulsion d'échantillonnage associée (P1, P2 . . . Pn) est respectivement appliquée à chaque comparateur (V1, V2 . . . Vn), que l'entrée de signaux d'un étage de décision majoritaire connu en soi (ME2 . . . ou MEn) est respectivement reliée à la sortie de signaux du second au n$^{ième}$ comparateur (V2 . . . Vn), que les sorties de signaux des étages de décision majoritaire (ME2 . . . MEn) ou la sortie de signaux du premier comparateur (V1) sont respectivement reliées aux entrées de signaux individuelles d'un étage de décision majoritaire pour évaluer le taux d'erreurs moyen (MEF), en amont duquel est monté un étage de pondération (G) connu en soi, avec un dispositif d'évaluation du taux d'erreurs (FA) et avec des entrées individuelles d'une mémoire (S), qu'une sortie de signaux du dispositif d'évaluation du taux d'erreurs (FA) est reliée à une entrée de signaux d'un circuit de commande de sélection (WS), qu'une sortie de signaux de l'étage de décision majoritaire pour évaluer un taux d'erreurs moyen (MEF) est reliée à une autre entrée de signaux du dispositif d'évaluation du taux d'erreurs (FA), que des sorties de signaux individuelles de la mémoire (S) sont reliées avec ces bornes de sélection individuelles respectivement associées d'un dispositif de sélection (W), et qu'une sortie de signaux du dispositif de commande (WS) du dispositif de sélection délivre un signal de réglage pour le dispositif de sélection (W) auquel est relié un collecteur d'informations (IS).

4. Circuit suivant la revendication 3, caractérisé par le fait que la mémoire (s) est constituée par un grand nombre de mémoires circulantes, par exemple des mémoires à couplage direct de charge (CCD).

**Claims**

1. Method for the recognition of digital information in digital information transmission, in particular information transmission in mobile radio communications systems, wherein a sampling pulse (P1) is derived from the digital information available at the receiving end, which pulse preferably has a whole-numbered multiple of the information clock pulse frequency, and wherein a sampling time (PA) is interposed into the respective zone of an information element in which the pulse (I) which is to be sampled and which represents this information element assumes its supposed quasi-stationary state, in which method each acquired information element is intermediately stored whereupon during each intermediate storage phase each information element is compared with each other information element, and wherein at the end of the intermediate storage phase one of a possible plurality of information elements which have been recognised as being error-free is retransmitted, characterised in that at least one further non-correlated sampling pulse (P2) is derived from the digital information available at the receiving end, which pulse has a further whole-numbered multiple of the information clock pulse frequency, that further flanks of the sampling pulse (P2) are located at a corresponding number of sampling times (PA') within a more extensive sampling zone (Z) of the pulse (I) which represents the information element, that a comparison is carried out between the first sampling result and one or more subsequent sampling results for each individual information element, that a majority decision is made on the basis of the available sampling results, that all the provided sampling modes are operative simultaneously and that the non-retransmitted information elements are cancelled.

2. Method as claimed in claim 1, characterised in that in the event that no error-free information element is recognised, it is that erroneous information element which has been obtained from the sampling mode which has produced the lowest average error rate which is retransmitted.

3. Circuit arrangement for the implementation of the method claimed in claim 1 or 2, characterised in that a demodulator (D) which is known per se and which is connected in known manner to a carrier frequency generator (TF) can be supplied via a signal input with an antenna input signal, that a signal output of the demodulator (D) is connected to signal inputs of a plurality of comparators (V1,V2 . . . Vn) known per se and to signal inputs of a plurality of different, non-correlated clock pulse generating devices (TE1,TE2 . . . TEn), that each comparator (V1,V2 . . . Vn) is supplied with the associated sampling pulse (P1,P2 . . . Pn), that a majority decision stage (ME2 . . . MEn) known per se is connected by its signal input to the signal output of the second to n-th comparator (V2 . . . Vn), that the signal outputs of the majority decision stages (ME2 . . . MEn) and the signal output of the first comparator (V1) are respectively connected to individual signal inputs of a majority decision stage which serves to assess the average error rate (MEF) and which is preceded by an evaluation stage (G) known per se, to an error rate analysis device (FA), and to individual inputs of a store (S), that a signal output of the error rate analysis device (FA) is connected to a signal input of a selector control unit (WS), that a signal output of the majority decision stage which serves to assess an average error rate (MEF) is connected to a further signal input of the error rate analysis device (FA), that individual signal outputs of the store (S) are connected to individual selector terminals, respectively assigned to said outputs, of a selector device (W), and that a signal output of the selector device control unit (WS) supplies a control signal for the selector device (W) to which an information sink (IS) is connected.

4. Circuit arrangement as claimed in claim 3, characterised in that the store (S) comprises a plurality of transit stores, for example charge-coupled stores (CCD).

0 048 866

FIG 1

FIG 2